(19) Europäisches Patentamt / European Patent Office / Office européen des brevets

(11) **EP 2 103 651 A1**

(12) **EUROPEAN PATENT APPLICATION**
published in accordance with Art. 153(4) EPC

(43) Date of publication:
**23.09.2009 Bulletin 2009/39**

(51) Int Cl.:
**C08L 27/06** (2006.01)    **C08K 3/34** (2006.01)
**H01B 3/44** (2006.01)

(21) Application number: **07832512.3**

(22) Date of filing: **26.11.2007**

(86) International application number:
**PCT/JP2007/072787**

(87) International publication number:
**WO 2008/078490 (03.07.2008 Gazette 2008/27)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **22.12.2006 JP 2006346401**

(71) Applicant: **Adeka Corporation**
**Arakawa-ku**
**Tokyo 116-0012 (JP)**

(72) Inventors:
• **HASEGAWA, Satsuki**
**Saitama-shi**
**Saitama 336-0022 (JP)**

• **HARADA, Masashi**
**Saitama-shi**
**Saitama 336-0022 (JP)**
• **NAGAHAMA, Masaru**
**Saitama-shi**
**Saitama 336-0022 (JP)**

(74) Representative: **Jones, Helen M.M.**
**Gill Jennings & Every LLP**
**Broadgate House**
**7 Eldon Street**
**London EC2M 7LH (GB)**

(54) **VINYL CHLORIDE RESIN COMPOSITION**

(57) A vinyl chloride resin composition that has better electrical insulating properties than existing vinyl chloride resin compositions and a wire coating material that includes the vinyl chloride resin composition are provided.

A vinyl chloride resin composition contains 0.1 to 3 parts by weight of synthetic aluminum silicate per 100 parts by weight of a vinyl chloride resin, the synthetic aluminum silicate having an apparent specific gravity of 7 ml/g or more. Synthetic aluminum silicate having a specific surface area of 400 $m^2$/g or more can be preferably used. The wire coating material contains the vinyl chloride resin composition.

**Description**

Technical Field

The present invention relates to a vinyl chloride resin composition (hereinafter also referred to simply as "resin composition") and, more particularly, to a vinyl chloride resin composition having improved electrical resistance.

Background Art

Vinyl chloride resin has excellent electrical insulating properties, high arc resistance, high tracking resistance, and high withstanding voltage and is therefore very important as an insulating material, as compared with rubber and polyolefins. However, the excellent characteristics of vinyl chloride resin deteriorate owing to thermal and oxidative degradation, and therefore vinyl chloride resin becomes unusable for practical applications.

To overcome these drawbacks, various stabilizers have been added to vinyl chloride resin insulating materials. Among others, lead stabilizers, such as tribasic lead sulphate and lead stearate, have been used. These stabilizers are excellent heat stabilizers and have advantages, such as relatively low prices. However, lead stabilizers have high toxicity and insufficient electrical insulating properties. In particular, the electrical insulating properties of lead stabilizers deteriorate with increasing temperature of an insulator.

Thus, lead stabilizers have recently been substituted by barium-zinc stabilizers and calcium-zinc stabilizers. However, low-toxic stabilizers alone have insufficient stabilizing effect and are practically used in combination with various additive agents that improve resistance to light, heat, and oxidation, such as an organic phosphite compound, epoxy compound, or phenol antioxidant, a benzophenone or benzotriazole ultraviolet absorber, and a hindered amine light stabilizer.

Although inorganic compounds or polyols have been used as electrical insulation improvers, these improvers have a limited improving effect. Thus, there has been a demand for a material that can substitute these known electrical insulation improvers. However, such a material has not been found.

For example, Patent Document 1 discloses a vinyl chloride resin composition that contains a hydrotalcite compound and an alkaline earth metal or aluminum silicate. Patent Document 2 discloses a vinyl chloride resin composition that contains a hydrotalcite compound and an aluminosilicate compound of an alkaline earth metal salt. However, for example, a composition that contains calcium carbonate and 0.5 parts by weight of silicate per 100 parts by weight of a vinyl chloride resin has a volume resistivity of about 20 x $10^{12}$ Ωcm. Thus, existing vinyl chloride resin compositions have insufficient electrical insulating properties.

Patent Document 1: Japanese Unexamined Patent Application Publication No. 5-179090 (Claim)
Patent Document 2: Japanese Unexamined Patent Application Publication No. 8-109297 (Claim)

Disclosure of Invention

Problems to be solved by the Invention

As described above, since vinyl chloride resin insulating materials heretofore studied are not satisfactory, there is a demand for a vinyl chloride resin composition having improved electrical insulating properties.

Accordingly, it is an object of the present invention to solve the problems described above and provide a vinyl chloride resin composition that has better electrical insulating properties than existing vinyl chloride resin compositions.

Means for Solving the Problems

As a result of diligent and repeated investigations, the present inventors completed the present invention by finding that the problems described above can be solved by incorporating particular synthetic aluminum silicate into a vinyl chloride resin.

That is, a vinyl chloride resin composition according to the present invention contains 0.1 to 3 parts by weight of synthetic aluminum silicate per 100 parts by weight of a vinyl chloride resin, the synthetic aluminum silicate having an apparent specific gravity of 7 ml/g or more. In a resin composition according to the present invention, the synthetic aluminum silicate preferably has a specific surface area of 400 $m^2$/g or more.

A wire coating material according to the present invention contains the vinyl chloride resin composition according to the present invention.

Advantages

The present invention can provide a vinyl chloride resin composition having a high electrical resistance. Use of the vinyl chloride resin composition can provide a wire coating material having excellent electrical insulating properties.

Best Modes for Carrying Out the Invention

A vinyl chloride resin composition according to the present invention will be described in detail below.

A vinyl chloride resin used in the present invention can be prepared by any method, including bulk polymerization, solution polymerization, suspension polymerization, and emulsion polymerization. Examples of the vinyl chloride resin include polyvinyl chloride, chlorinated polyvinyl chloride, polyvinylidene chloride, chlorinated polyethylene, a vinyl chloride-vinyl acetate copolymer, a vinyl chloride-ethylene copolymer, a vinyl chloride-propylene copolymer, a vinyl chloride-styrene copolymer, a vinyl chloride-isobutylene copolymer, a vinyl chloride-vinylidene chloride copolymer, a vinyl chloride-styrene-maleic anhydride terpolymer, a vinyl chloride-styrene-acrylonitrile copolymer, a vinyl chloride-butadiene copolymer, a vinyl chloride-isoprene copolymer, a vinyl chloride-chlorinated propylene copolymer, a vinyl chloride-vinylidene chloride-vinyl acetate terpolymer, a vinyl chloride-maleate copolymer, a vinyl chloride-methacrylate copolymer, a vinyl chloride-acrylonitrile copolymer, vinyl chloride-vinyl ether copolymers, and blends thereof, as well as blends, block copolymers, and graft copolymers with chlorine-free synthetic resins, such as an acrylonitrile-styrene copolymer, an acrylonitrile-butadiene-styrene copolymer, an ethylenevinyl acetate copolymer, an ethylene-ethyl (meth)acrylate copolymer, and a polyester.

Among these vinyl chloride resins, a vinyl chloride homopolymer, (polyvinyl chloride), is particularly preferred. Use of polyvinyl chloride can provide a material having flexibility, high flame resistance, and excellent processibility.

A synthetic aluminum silicate having an apparent specific gravity of 7 ml/g or more used in the present invention may be any synthetic aluminum silicate having the specified apparent specific gravity and may be a commercial product, such as Kyoward 700 (manufactured by Kyowa Chemical Industry Co., Ltd.). Use of synthetic aluminum silicate having an apparent specific gravity of 7 ml/g or more can significantly improve the electrical resistance of the resin composition. Preferably, the synthetic aluminum silicate has an apparent specific gravity in the range of 8 to 10 ml/g. Preferably, the synthetic aluminum silicate has a specific surface area of 400 $m^2$/g or more. It is assumed that such synthetic aluminum silicate can efficiently trap impurities that reduce the electrical resistance in the resin. More preferably, the synthetic aluminum silicate has a specific surface area in the range of 500 to 800 $m^2$/g.

The content of synthetic aluminum silicate in the resin composition according to the present invention ranges from 0.1 to 3 parts by weight, preferably 0.2 to 1 part by weight, per 100 parts by weight of a vinyl chloride resin. At a content of synthetic aluminum silicate below 0.1 parts by weight, the electrical resistance is not sufficiently improved. On the other hand, at a content of synthetic aluminum silicate above 3 parts by weight, the electrical resistance is not significantly improved, and the color of the resin composition deteriorates.

A vinyl chloride resin composition according to the present invention may contain a plasticizer, a metal salt compound, such as a barium-zinc stabilizer, a calcium-zinc stabilizer, a tin stabilizer, or a lead stabilizer, a hydrotalcite compound, a β-diketone compound, perchlorate, an organic phosphite compound, a phenol or sulfur antioxidant, an epoxy compound, a polyol compound, a hindered amine compound, an ultraviolet absorber, a filler, and a stabilization aid, which are commonly used in vinyl chloride resin compositions.

The plasticizer may be a plasticizer commonly used for vinyl chloride resin and includes phthalate plasticizers, such as dibutyl phthalate, butyl hexyl phthalate, diheptyl phthalate, dioctyl phthalate, di-2-ethylhexyl phthalate, diisononyl phthalate, diisodecyl phthalate, diundecyl phthalate, dilauryl phthalate, ditridecyl phthalate, dioctadecyl phthalate, dicyclohexyl phthalate, and dioctyl terephthalate; adipate plasticizers, such as dioctyl adipate, diisononyl adipate, diisodecyl adipate, and di(butyl diglycol) adipate; phosphate plasticizers, such as triphenyl phosphate, tricresyl phosphate, trixylenyl phosphate, tri(isopropylphenyl) phosphate, triethyl phosphate, tributyl phosphate, trioctyl phosphate, tri(butoxyethyl) phosphate, octyldiphenyl phosphate, phenol resorcinol polyphosphate, and phenol bisphenol A polyphosphate; polyester plasticizers composed of a polyhydric alcohol, a dibasic acid, and, if necessary, a monohydric alcohol and/or a monocarboxylic acid as a stopper, the polyhydric alcohol being ethylene glycol, diethylene glycol, triethylene glycol, 1,2-propylene glycol, 1,3-propylene glycol, 1,3-butanediol, 1,4-butanediol, 2-methyl-1,3-propylene glycol, 1,5-hexanediol, 1,6-hexanediol, neopentyl glycol, glycerin, trimethylolpropane, pentaerythritol, or dipentaerythritol, the dibasic acid being oxalic acid, malonic acid, succinic acid, glutaric acid, adipic acid, pimelic acid, suberic acid, azelaic acid, sebacic acid, phthalic acid, isophthalic acid, or terephthalic acid; epoxidized vegetable oils such as epoxidized soybean oil and epoxidized castor oil; tetrahydrophthalic acid plasticizers; azelaic acid plasticizers; sebacic acid plasticizers; stearic acid plasticizers; citric acid plasticizers; trimellitic acid plasticizers; pyromellitic acid plasticizers; and biphenylene polycarboxylic acid plasticizers.

The amount of the plasticizer generally ranges from 30 to 100 parts by weight, preferably 40 to 80 parts by weight, more preferably 45 to 70 parts by weight, per 100 parts by weight of a vinyl chloride resin. Less than 30 parts by weight of the plasticizer may have insufficient plasticizing effect. On the other hand, more than 100 parts by weight of the plasticizer may result in insufficient strength of the resulting vinyl chloride resin composition, and therefore the vinyl chloride resin composition may become unusable for practical applications.

Examples of the metal salt compound include organic carboxylates, such as stearates, laurates, oleates, maleate, and benzoates, phosphates, such as stearyl phosphate, distearyl phosphate, phenyl phosphate, and diphenyl phosphate, and basic salts, carbonates, and sulfates thereof, and basic salts, metal oxides, and metal hydroxides thereof. These compounds may be used alone or as a mixture thereof, or occasionally a complex thereof.

The hydrotalcite compound is preferably a double salt compound composed of magnesium and/or zinc and aluminum having the following general formula (I). Water of crystallization of the hydrotalcite compound may be removed.

$$Mg_{x1}Zn_{x2}Al_2 \cdot (OH)_{2(x1+x2)+4} \cdot (CO_3)_{1-y1/2} \cdot mH_2O \qquad (I)$$

(wherein x1, x2, and y1 satisfy the following formula:

$$0 \leq x2/x1 \leq 10,\ 2 \leq x1 + x2 < 20,\ \text{and}\ 0 \leq y1 \leq 2,$$

and m denotes zero or an integer.)

The hydrotalcite compound may be a natural or synthetic compound. The synthetic compound may be prepared by a known synthesis method described in Japanese Examined Patent Application Publications No. 46-2280, 50-30039, 51-29129, 3-36839, as well as Japanese Unexamined Patent Application Publications No. 61-174270, 2001-164042, 2002-53722 and the like. In the present invention, the hydrotalcite compound may have any crystal structure and any crystal particle size. Residual heavy metals, such as iron, in the raw materials of the hydrotalcite compound are preferably minimized at practical refining costs.

The hydrotalcite compound may be coated with a higher fatty acid, such as stearic acid, a higher fatty acid metal salt, such as an alkali metal oleate, an organic sulfonate metal salt, such as an alkali metal salt of dodecylbenzenesulfonic acid, a higher fatty acid amide, a higher fatty acid ester, or wax.

Examples of the β-diketone compound include acetylacetone, triacetylmethane, 2,4,6-heptatrione, butanoylacetylmethane, lauroylacetylmethane, palmitoylacetylmethane, stearoylacetylmethane, phenylacetylacetylmethane, dicyclohexylcarbonylmethane, benzoylformylmethane, benzoylacetylmethane, dibenzoylmethane, octylbenzoylmethane, bis(4-octylbenzoyl)methane, benzoyldiacetylmethane, 4-methoxybenzoylbenzoylmethane, bis(4-carboxymethylbenzoyl)methane, 2-carboxymethylbenzoylacetyloctylmethane, dehydroacetic acid, cyclohexane-1,3-dione, 3,6-dimethyl-2,4-dioxycyclohexane-1-carboxylic acid methyl ester, 2-acetylcyclohexanone, dimedone, and 2-benzoylcyclohexane. Metal salts of these β-diketone compounds may also be used. Examples of metals for use in β-diketone metal salts include alkali metals, such as lithium, sodium, and potassium; alkaline earth metals, such as magnesium, calcium, strontium, and barium; and zinc, aluminum, tin, and alkyltin.

Examples of perchlorate include sodium perchlorate, potassium perchlorate, barium perchlorate, ammonium perchlorate, and hydrotalcite treated with perchloric acid.

Examples of the organic phosphite compound include triphenyl phosphite, tris(2,4-ditert-butylphenyl) phosphite, tris(nonylphenyl) phosphite, tris(dinonylphenyl) phosphite, tris(mono- and di-nonylphenyl) phosphite, diphenyl acid phosphite, 2,2'-methylenebis(4,6-ditert-butylphenyl)2-ethylhexyl phosphite, diphenyldecyl phosphite, phenyldiisodecyl phosphite, tributyl phosphite, tris(2-ethylhexyl) phosphite, tridecyl phosphite, trilauryl phosphite, dibutyl acid phosphite, dilauryl acid phosphite, trilauryl trithiophosphite, bis(neopentyl glycol)·1,4-cyclohexanedimethyl diphosphite, bis(2,4-ditert-butylphenyl)pentaerythritol diphosphite, bis(2,6-ditert-butyl-4-methylphenyl)pentaerythritol diphosphite, bis(2,4-dicumylphenyl)pentaerythritol diphosphite, distearyl pentaerythritol diphosphite, hydrogenated-4,4'-isopropylidenediphenol polyphosphite, tetra($C_{12}$ to $C_{15}$ mixed alkyl)-4,4'-isopropylidenediphenyl diphosphite, tetratridecyl·4,4'-butylidene bis(2-tert-butyl-5-methylphenol) diphosphite, hexa(tridecyl)·1,1,3-tris(2-methyl-5-tert-butyl-4-hydroxyphenyl)butane·triphosphite, 9,10-dihydro-9-oxa-10-phosphaphenanthrene-10-oxide, and 2-butyl-2-ethyl-1,3-propanediol·2,4,6-tri-tertbutylphenol-monophosphite.

Examples of the phenol antioxidant include 2,6-ditert-butyl-4-methylphenol, 2,6-diphenyl-4-octadecyloxyphenol, stearyl(3,5-ditert-butyl-4-hydroxyphenyl) propionate, distearyl(3,5-ditert-butyl-4-hydroxybenzyl) phosphonate, thiodiethylene bis[(3,5-ditert-butyl-4-hydroxyphenyl) propionate], 4,4'-thiobis(2-tert-butyl-5-methylphenol), 2-methyl-4,6-bis(octylthiomethyl)phenol, 2-(3,5-ditert-butyl-4-hydroxyphenyl)amino-4,6-bis(octylthio)-s-triazine, 2,2'-methylenebis(4-methyl-6-tert-butylphenol), bis[3,3-bis(4-hydroxy-3-tert-butylphenyl)butyric acid]glycol ester, 4,4'-butylidene bis(5-tert-butyl-4-hydroxy-2-methylphenyl), 2,2'-ethylidene bis(4,6-ditert-butylphenol), 1,1,3-tris(2-methyl-4-hydroxy-5-tert-butylphenyl)butane, bis[2-tert-butyl-4-methyl-6-(2-hydroxy-3-tert-butyl-5-methylbenzyl)phenyl] terephthalate, 1,3,5-tris(2,6-dimethyl-3-hydroxy-4-tert-butylbenzyl) isocyanurate, 1,3,5-tris(3,5-ditert-butyl-4-hydroxybenzyl) isocyanurate, 1,3,5-tris

(3,5-ditert-butyl-4-hydroxybenzyl)-2,4,6-trimethylbenzene, 1,3,5-tris[(3,5-ditert-butyl-4-hydroxyphenyl)propionyloxyethyl] isocyanurate, tetrakis[3-(3,5-ditert-butyl-4-hydroxyphenyl) propionyloxymethyl]methane, 2-tert-butyl-4-methyl-6-(2-acryloyloxy-3-tert-butyl-5-methylbenzyl)phenol, 2-tert-amyl-4-methyl-6-[1-(2-acryloyloxy-3-tert-amyl-5-methylphenyl) ethyl]phenol, 3,9-bis[2-[3-(3-tert-butyl-4-hydroxy-5-methylphenyl)propanoyloxy]-1,1-dimethylethyl]-2,4,8,10-tetraoxaspiro[5.5]undecane, and triethylene glycol bis[3-(3-tert-butyl-4-hydroxy-5-methylphenyl) propionate].

Examples of the sulfur antioxidant include dialkyl thiodipropionate, such as dilauryl thiodipropionate, dimyristyl thiodipropionate, distearyl thiodipropionate, and myristylstearyl thiodipropionate, and β-alkyl mercaptopropionates of polyols, such as pentaerythritol tetra(3-dodecyl mercaptopropionate).

Examples of the epoxy compound include epoxidized animal and vegetable oils, such as epoxidized soybean oil, epoxidized linseed oil, epoxidized tung oil, epoxidized fish oil, epoxidized beef tallow oil, epoxidized castor oil, and epoxidized safflower oil, epoxidized methyl stearate, epoxidized butyl stearate, epoxidized 2-ethylhexyl stearate, epoxidized stearyl stearate, epoxidized polybutadiene, tris(epoxypropyl) isocyanurate, epoxidized tall oil fatty acid esters, epoxidized linseed oil fatty acid esters, bisphenol A diglycidyl ether, vinylcyclohexene diepoxide, dicyclohexene diepoxide, and 3,4-epoxycyclohexylmethyl-3,4-epoxycyclohexane carboxylate.

Examples of the polyol compound include trimethylolpropane, ditrimethylolpropane, glycerin, pentaerythritol, dipentaerythritol, and polypentaerythritol, partial esters of these polyol compounds and fatty acids, such as stearic acid, bis(dipentaerythritol) adipate, tris(2-hydroxyethyl) isocyanurate, and saccharides, such as sorbitol and mannitol.

Examples of the hindered amine compound include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl) sebacate, bis (1,2,2,6,6-pentamethyl-4-piperidyl) sebacate, bis(1-octyloxy-2,2,6,6-tetramethyl-4-piperidyl) sebacate, tetrakis(2,2,6,6-tetramethyl-4-piperidyl)-1,2,3,4-butane tetracarboxylate, tetrakis(1,2,2,6,6-pentamethyl-4-piperidyl)-1,2,3,4-butane tetracarboxylate, bis(1,2,2,6,6-pentamethyl-4-piperidyl)·di(tridecyl)-1,2,3,4-butane tetracarboxylate, bis(1,2,2,6,6-pentamethyl-4-piperidyl)-2-butyl-2-(3,5-ditert-butyl-4-hydroxybenzyl) malonate, 1-(2-hydroxyethyl)-2,2,6,6-tetramethyl-4-piperidinol/diethyl succinate polycondensates, 1,6-bis(2,2,6,6-tetramethyl-4-piperidylamino)hexane/dibromoethane polycondensates, 1,6-bis(2,2,6,6-tetramethyl-4-piperidylamino)hexane/2,4-dichloro-6-morpholino-s-triazine polycondensates, 1,6-bis(2,2,6,6-tetramethyl-4-piperidylamino)hexane/2,4-dichloro-6-tert-octylamino-s-triazine polycondensates, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,5,8,12- tetrakis [2,4- bis (N- butyl- N-(1,2,2,6,6- pentamethyl- 4- piperidyl) amino)-s- triazine- 6- yl]- 1,5,8,12- tetraazadodecane, 1,6,11-tris[2,4-bis(N-butyl-N-(2,2,6,6-tetramethyl-4-piperidyl)amino)-s-triazine-6-ylamino]undecane, 1,6,11-tris [2,4-bis(N-butyl-N-(1,2,2,6,6-pentamethyl-4-piperidyl)amino)-s-triazine-6-ylamino]undecane, and 3,9-bis[1,1-dimethyl-2-[tris(1,2,2,6,6-pentamethyl-4-piperidyloxycarbonyl)butylcarbonyloxy]ethyl]-2,4,8,10-tetraoxaspiro[5.5]undecane.

Examples of the ultraviolet absorber include benzotriazoles, such as 2-(2-hydroxy-5-methylphenyl)benzotriazole, 2-(2-hydroxy-5-tert-octylphenyl)benzotriazole, 2-(2-hydroxy-3,5-ditert-butylphenyl)-5-chlorobenzotriazole, 2-(2-hydroxy-3-tert-butyl-5-methylphenyl)-5-chlorobenzotriazole, 2-(2-hydroxy-3,5-dicumylphenyl)benzotriazole, and 2,2'-methylenebis(4-tert-octyl-6-benzotriazolyl)phenol; 2-hydroxybenzophenones, such as 2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone); benzoates, such as phenyl salicylate, resorcinol monobenzoate, 2,4-ditert-butylphenyl-3,5-ditert-butyl-4-hydroxybenzoate, 2,4-ditert-amylphenyl-3,5-ditert-butyl-4-hydroxybenzoate, and hexadecyl-3,5-ditert-butyl-4-hydroxybenzoate; substituted oxanilides, such as 2-ethyl-2'-ethoxyoxanilide and 2-ethoxy-4'-dodecyloxanilide; cyanoacrylates, such as ethyl-α-cyano-β,β-diphenyl acrylate and methyl-2-cyano-3-methyl-3-(p-methoxyphenyl) acrylate; and triaryltriazines, such as 2-(2-hydroxy-4-octoxyphenyl)-4,6-bis(2,4-ditert-butylphenyl)-s-triazine, 2-(2-hydroxy-4-methoxyphenyl)-4,6-diphenyl-s-triazine, 2-(2-hydroxy-4-propoxy-5-methylphenyl)-4,6-bis(2,4-ditert-butylphenyl)-s-triazine, and 2-(2-hydroxy-4-(2-ethylhexanoyloxy) ethoxyphenyl)-4,6-diphenyl-s-triazine.

Examples of the filler include calcium carbonate (heavy, light, and precipitated), gypsum, titanium oxide, barium sulfate, alumina, hydrocalumite, sodium silicate, magnesium silicate, aluminum silicate, calcium silicate, zeolite, silica stone, diatomaceous earth, activated clay, talc, mica, clay, colcothar, rock wool, graphite, and carbon black. In particular, calcium carbonate is preferred because of its insignificant adverse effect on the weatherability of a vinyl chloride resin.

Examples of the stabilization aid include diphenylthiourea, anilinodithiotriazine, melamine, benzoic acid, cinnamic acid, p-tert-butylbenzoic acid, anhydrous silicic acid, silicate, and zeolite.

If necessary, a resin composition according to the present invention may contain additive agents commonly used for vinyl chloride resin, for example, a cross-linker, an antistatic agent, an anti-fogging agent, an anti-plate-out agent, a surface-treating agent, a lubricant, a flame retardant, a fluorescent agent, a fungicide, a bactericide, a foaming agent, a metal deactivator, a mold-release agent, a pigment, a processing aid, an antioxidant, and a light stabilizer.

A resin composition according to the present invention can be used independently of the method for processing a vinyl chloride resin and can be preferably used, for example, in roll processing, extrusion, casting, and pressure forming.

In particular, a vinyl chloride resin composition according to the present invention can be preferably used as a wire coating material and exhibit excellent electrical insulating properties.

EXAMPLES

The present invention will be further described in the following examples. However, the present invention is not limited to these examples.

<Examples 1 and 2 and Comparative Examples 1 and 2>

A compound shown in Table 1 was kneaded with a rolling mill at 160°C and 30 rpm for 5 minutes and was pressed at 190°C for 5 minutes to form a sheet having a thickness of 1 mm. A test specimen was prepared from the sheet and was subjected to a volume resistivity test (VR) [Ωcm] in accordance with JIS K 6723.

Table 2 shows the results.

[Table 1]

| Compound | Parts by weight |
|---|---|
| Vinyl chloride resin | 100 |
| Diisononyl phthalate | 50 |
| Heavy calcium carbonate | 20 |
| Hydrotalcite | 3.5 |
| Zinc stearate | 0.7 |
| Dibenzoylmethane | 0.1 |
| Tetrakis[3-(3,5-ditert-butyl-4-hydroxyphenyl)propionyloxymethyl]methane | 0.1 |
| Sorbitol | 0.05 |
| Inorganic additive agent shown in Table 2 | See Table 2 |

[Table 2]

| | | Example 1 | Example 2 | Example 3 | Comparative Example 1 | Comparative Example 2 | Comparative Example 3 |
|---|---|---|---|---|---|---|---|
| Inorganic additive agent | Synthetic aluminum silicate 1[*1] | 0.25 | 0.5 | - | - | - | - |
| | Synthetic aluminum silicate 2[*2] | - | - | 0.25 | - | - | - |
| | Synthetic aluminum silicate 3[*3] | - | - | - | 0.25 | 0.5 | - |
| | Synthetic aluminum silicate 4[*] | - | - | - | - | - | 0.25 |
| Evaluation result | VR ($\times 10^{12}\Omega$cm) | 20.6 | 42.8 | 19.8 | 13.5 | 22.3 | 9.6 |

*1) Synthetic aluminum silicate 1: Kyoward 700 (manufactured by Kyowa Chemical Industry Co., Ltd.) (apparent specific gravity 8.33 ml/g, specific surface area 563 $m^2$/g)

*2) Synthetic aluminum silicate 2: aluminum silicate (apparent specific gravity 7.29 ml/g, specific surface area 427 $m^2$/g)

*3) Synthetic aluminum silicate 3: aluminum silicate (apparent specific gravity 5.09 ml/g, specific surface area 267 $m^2$/g)

*4) Synthetic aluminum silicate 4: aluminum silicate (apparent specific gravity 2.21 ml/g, specific surface area 193 $m^2$/g)

EP 2 103 651 A1

The results of Example 1 and Comparative Example 1 in Table 1 clearly show that synthetic aluminum silicate having an apparent specific gravity of 7 ml/g or more significantly improves the volume resistivity, as compared with synthetic aluminum silicate having a small apparent specific gravity. The results of Example 2 and Comparative Example 2 show that this tendency is enhanced with an increase in the content of synthetic aluminum silicate. Thus, it is clear that synthetic aluminum silicate having an apparent specific gravity of 7 ml/g or more is an excellent electrical resistance improver for vinyl chloride resin.

**Claims**

1. A vinyl chloride resin composition comprising 0.1 to 3 parts by weight of synthetic aluminum silicate per 100 parts by weight of a vinyl chloride resin, the synthetic aluminum silicate having an apparent specific gravity of 7 ml/g or more.

2. The vinyl chloride resin composition according to Claim 1, wherein the synthetic aluminum silicate has a specific surface area of 400 $m^2$/g or more.

3. A wire coating material comprising the vinyl chloride resin composition according to Claim 1 or 2.

## INTERNATIONAL SEARCH REPORT

| International application No. |
| --- |
| PCT/JP2007/072787 |

A. CLASSIFICATION OF SUBJECT MATTER
*C08L27/06*(2006.01)i, *C08K3/34*(2006.01)i, *H01B3/44*(2006.01)i

According to International Patent Classification (IPC) or to both national classification and IPC

B. FIELDS SEARCHED

Minimum documentation searched (classification system followed by classification symbols)
C08L27/00-24, C08K3/00-40, H01B3/44

Documentation searched other than minimum documentation to the extent that such documents are included in the fields searched
Jitsuyo Shinan Koho        1922-1996   Jitsuyo Shinan Toroku Koho   1996-2007
Kokai Jitsuyo Shinan Koho   1971-2007   Toroku Jitsuyo Shinan Koho   1994-2007

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
| --- | --- | --- |
| A | JP 2006-22252 A  (Tatsuta Electric Wire & Cable Co., Ltd.), 26 January, 2006 (26.01.06), Full text (Family: none) | 1-3 |
| A | JP 2005-276699 A  (Asahi Denka Kogyo Kabushiki Kaisha), 06 October, 2005 (06.10.05), Full text (Family: none) | 1-3 |
| A | JP 2005-263918 A  (Mizusawa Industrial Chemicals, Ltd.), 29 September, 2005 (29.09.05), Full text (Family: none) | 1-3 |

| ☒ | Further documents are listed in the continuation of Box C. | ☐ | See patent family annex. |

| * | Special categories of cited documents: |
| --- | --- |
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 20 December, 2007 (20.12.07) | 08 January, 2008 (08.01.08) |

| Name and mailing address of the ISA/ | Authorized officer |
| --- | --- |
| Japanese Patent Office | |
| Facsimile No. | Telephone No. |

Form PCT/ISA/210 (second sheet) (April 2007)

**INTERNATIONAL SEARCH REPORT**

International application No.

PCT/JP2007/072787

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-189777 A  (Asahi Denka Kogyo Kabushiki Kaisha),<br>08 July, 2004 (08.07.04),<br>Full text<br>(Family: none) | 1-3 |
| A | JP 11-189675 A  (Mizusawa Industrial Chemicals, Ltd.),<br>13 July, 1999 (13.07.99),<br>Full text<br>(Family: none) | 1-3 |
| A | JP 9-324088 A  (The Furukawa Electric Co., Ltd.),<br>16 December, 1997 (16.12.97),<br>Full text<br>(Family: none) | 1-3 |
| A | JP 8-269280 A  (Mizusawa Industrial Chemicals, Ltd.),<br>15 October, 1996 (15.10.96),<br>Full text<br>& EP 0725109 A1          & US 5648413 A | 1-3 |
| A | JP 8-109298 A  (Asahi Denka Kogyo Kabushiki Kaisha),<br>30 April, 1996 (30.04.96),<br>Full text<br>(Family: none) | 1-3 |
| A | JP 1-236253 A  (Yazaki Corp.),<br>21 September, 1989 (21.09.89),<br>Full text<br>(Family: none) | 1-3 |
| A | JP 60-127254 A  (Toyo Soda Manufacturing Co., Ltd.),<br>06 July, 1985 (06.07.85),<br>Full text<br>(Family: none) | 1-3 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5179090 A
- JP 8109297 A
- JP 46002280 A
- JP 50030039 A
- JP 51029129 A
- JP 3036839 A
- JP 61174270 A
- JP 2001164042 A
- JP 2002053722 A